# EUROPÄISCHE PATENTSCHRIFT

(11) **EP 2 855 951 B1**
(45) Veröffentlichungstag und Bekanntmachung des Hinweises auf die Patenterteilung: **05.07.2017**
(21) Anmeldenummer: 13726494.1
(22) Anmeldetag: 29.05.2013
(51) Int. Cl.: F16B 25/00, B21H 3/06

(54) **SCHRAUBE UND VERFAHREN ZU IHRER HERSTELLUNG**
SCREW AND METHOD FOR THE PRODUCTION THEREOF
VIS ET PROCÉDÉ DE FABRICATION DE LADITE VIS

(30) Priorität: 04.06.2012 DE 102012209407
(43) Veröffentlichungstag der Anmeldung: 08.04.2015
(73) Patentinhaber: SWG Schraubenwerk Gaisbach GmbH, 74638 Waldenburg (DE)
(72) Erfinder: STIEBITZ, Günter, 74638 Waldenburg (DE)
(74) Vertreter: Patentanwälte Ruff, Wilhelm, Beier, Dauster & Partner mbB
(86) Internationale Anmeldenummer: PCT/EP2013/061001
(87) Internationale Veröffentlichungsnummer: WO 2013/182455

(56) Entgegenhaltungen:
- EP-A1- 0 319 812
- EP-A1- 1 738 844
- EP-A2- 2 206 931
- AU-A1- 2004 202 103
- US-A- 497 510
- US-A- 5 110 245
- US-A1- 2008 050 200
- US-A1- 2009 097 942

## Beschreibung

Die Erfindung geht aus von einer Schraube mit einem zylindrischen Schraubenschaft, einem vorderen Schraubenende und einem sich über den Schraubenschaft erstreckenden Gewinde. Solche Schrauben sind als metrische Schrauben, Blechschrauben, Spanplattenschrauben, Kunststoffschrauben usw. bekannt.

In der Automobilindustrie sind Schrauben mit einer Schabenut bekannt. Diese dienen dazu, Farbreste in Gewinden herauszuschälen. Auch bei Spanplattenschrauben sind Schabenuten bekannt, die von der Spitze ausgehen und bis zum Übergang zu dem zylindrischen Schraubenschaft reichen. Die bekannten Schabenuten werden nach Herstellung der Schraube spanabhebend hergestellt. Dies bedeutet einen zusätzlichen Arbeitsgang.

Es ist bereits eine Schraube bekannt, die innerhalb der kegelförmigen Schraubenspitze eine sehr schmale Schabenut aufweist, die beim Herstellen des von der Schraubenspitze begonnenen Lochs unterstützend mitwirkt (EP 1 738 844 A1). Die Schabenut erstreckt sich bis in das Material des Kerns der Schraube.

Weiterhin ist eine Schraube bekannt (US 497510), die zwei schmale Kerben aufweist, die sich über die gesamte Länge des Gewindes erstrecken und längs einer Schraubenlinie angeordnet sind. Die Kerben erstrecken sich bis auf den Kern der Schraube.

Eine ähnliche Schraube ist bekannt, bei der eine Vielzahl derartiger Unterbrechungen des Gewindes vorhanden ist, die ebenfalls über die gesamte Länge des Schraubenschafts reichen (AU 2004202103 A1, US 2008/0050200 A1, US 5110245 A).

Bei einer weiteren Schraube ist eine Unterbrechung des Gewindes über im wesentlich die gesamte Länge des Gewindes vorhanden, wobei die Unterbrechung wiederum längs einer Schraubenlinie verläuft (EP 0319812A1).

Bei einer nochmals weiteren Schraube weist das Gewinde zur Reduzierung des Einschraubmoments eine Kerbe auf, die entweder über die gesamte Länge des Gewindes oder auch nur über einen von der Schraubenspitze ausgehenden Bereich verläuft und nicht bis zum Kern des Gewindes reicht (EP 2 2006 931 A2). Weiterhin ist eine Schraube mit einem Gewinde bekannt, das durch eine spiralförmige Anordnung von Einkerbungen auf einer Länge durchquert ist (US 2009/0979421).

Der Erfindung liegt die Aufgabe zu Grunde, eine Schraube zu schaffen, die sich leichter herstellen lässt und bei der das zum Einschrauben der Schraube benötigte Drehmoment verringert wird, ohne dass die Auszugskraft, die erforderlich ist, die eingeschraubte Schraube herauszuziehen, beeinträchtigt wird.

Zur Lösung dieser Aufgabe schlägt die Erfindung eine Schraube mit den im Anspruch 1 genannten Merkmalen vor. Weiterbildungen der Erfindung sind Gegenstand von Unteransprüchen.

Während die bekannten Schabenuten aufgrund der Art der Herstellung üblicherweise in den Kern der Schraube eindringen, sieht die Erfindung vor, das die Schabelücke nur das Gewinde betrifft Durch die Anbringung der Schabelücke im Gewinde lässt sie sich auch in ihrer axialen Erstreckung genauer definieren.

Die Schabelücke wird also dadurch gebildet, dass mindestens ein Gewindegang bei unveränderter Steigung des Gewindes eine Kerbe aufweist, die in ihrer Umfangserstreckung der Größe der Schabelücke entspricht.

Die Schabelücke ermöglicht es, dass die dadurch gebildeten scharfen Kanten des Gewindes das Einschrauben der Schraube erleichtern, ohne dass die Auszugskraft der Schraube darunter leidet.

Zur Bildung einer Schabelücke in dem Gewinde muss mindestens ein Gewindegang unterbrochen sein. Erfindungsgemäß schlägt die Erfindung aber in Weiterbildung vor, dass das Gewinde über mehr als einem Gewindegang unterbrochen ist, beispielsweise über zwei bis drei Windungen.

Da die Schabelücke auch in Umfangsrichtung begrenzt sein soll, ist erfindungsgemäß in Weiterbildung vorgesehen, dass das Gewinde über einen Umfangswinkel von beispielsweise 15° unterbrochen ist, gegebenenfalls auch über einen Winkel von 30 bis 60°.

In nochmaliger Weiterbildung der Erfindung kann vorgesehen sein, dass das Gewinde mindestens über die Hälfte der Gewindehöhe und höchstens bis zum Schraubenschaft unterbrochen ist.

In nochmaliger Weiterbildung kann insbesondere vorgesehen sein, dass die Grenzen der Schabelücke in Umfangsrichtung gesehen parallel zur Achse der Schraube verlaufen. Die Schabelücke bildet also einen Bereich, dessen beide parallelen Längskanten in Axialrichtung verlaufen.

Während die bekannten Schabenuten im Normalfall innerhalb des sich verjüngenden die Schraubenspitze bildenden Bereichs der Schraube angeordnet sind, schlägt die Erfindung in Weiterbildung vor, dass die Schabelücke innerhalb des zylindrischen Bereichs des Schraubenschafts angeordnet ist.

Es wurde bereits erwähnt, dass die bekannten Schabenuten spanabhebend hergestellt werden, was einen zusätzlichen Arbeitsschritt und auch Bearbeitungsspäne erzeugt. Die Erfindung schlägt nun vor, dass die Schabelücke durch Umformen hergestellt wird. Dies vermeidet den Bearbeitungsabfall.

Erfindungsgemäß kann nun vorgesehen sein, dass die Gewindeunterbrechung durch ein nachträgliches Quetschen bzw. Kneifen der Schraube mit zwei gegenläufigen Stempeln herstellbar ist. Dies ist zwar auch ein zusätzlicher Arbeitsschritt, aber ein Arbeitsschritt, der sich mit geringem Aufwand durchführen lässt. Darüber hinaus entstehen keine Bearbeitungsabfälle. Auch die Abnutzung der beiden Stempel ist im Vergleich zu den Werkzeugen für eine spanabhebende Bearbeitung vernachlässigbar.

Die Erfindung schlägt ebenfalls vor, dass die Gewindeunterbrechung der Schraube durch einen Walzvorgang zusammen mit dem Walzen des Gewindes herstellbar ist. Bei dieser Art der Herstellbarkeit entfällt also ein nachträglicher Arbeitsschritt.

Die Erfindung schlägt ebenfalls ein Verfahren zum Herstellen einer Schraube, wie sie hierin beschrieben wird, vor, bei dem das Schraubengewinde zur Bildung einer in Länge und Breite begrenzten Schabelücke unterbrochen wird.

In Weiterbildung der Erfindung kann vorgesehen sein, dass die Unterbrechung des Schraubengewindes beim Walzen des Gewindes in den Drahtstift mit eingewalzt wird.

Ebenfalls kann erfindungsgemäß vorgesehen sein, dass die Schabelücke nach dem Herstellen des Gewindes durch ein Walzen nachträglich in das Gewinde gequetscht wird.

Die Erfindung schlägt ebenfalls einen Walzbacken zum Durchführen des Verfahrens vor, der eine Unterbrechung der Rillen enthält, die zur Bildung des Gewindes dienen.

Weitere Merkmale, Einzelheiten und Vorzüge der Erfindung ergeben sich aus den Ansprüchen und der Zusammenfassung, deren beider Wortlaut durch Bezugnahme zum Inhalt der Beschreibung gemacht wird, der folgenden Beschreibung bevorzugter Ausführungsformen der Erfindung sowie anhand der Zeichnung. Hierbei zeigen:
- Figur 1: die Ansicht einer Walzbacke zur Bildung einer Schraube nach der Erfindung;
- Figur 2: in vergrößertem Maßstab einen Ausschnitt aus dem Auslauf Bereich der Walzbacke der Figur 1;
- Figur 3: im gleichen Maßstab in Figur 2 einen Ausschnitt bei einer geänderten Ausführungsform;
- Figur 4: eine der Figur 2 in Figur 3 entsprechende Darstellung einer weiteren Ausführungsform einer Walzbacke zur Herstellung einer Schraube nach der Erfindung;
- Figur 5: einen Ausschnitt aus einer Schraube mit einer Schabelücke;
- Figur 6: einen der Figur 5 entsprechenden Ausschnitt einer Schraube nach einer weiteren Ausführungsform;
- Figur 7: eine Schraube vor Herstellung der Schabelücke;
- Figur 8: den Augenblick der Herstellung der Schabelücke.

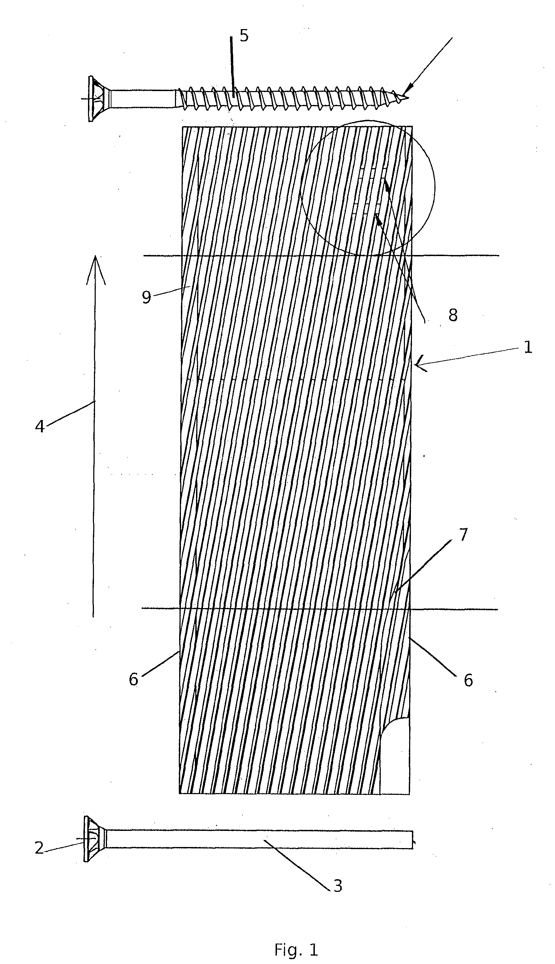

Die Figur 1 zeigt eine Draufsicht auf einer Walzbacke 1 zur Herstellung einer Schraube nach der Erfindung. Unten in Figur 1 ist der mit einem Schraubenkopf 2 versehene Drahtstift 3 dargestellt, in den mithilfe der Walzbacke 1 das Gewinde eingewalzt werden soll. Die Bewegung des Drahtstifts 3 ist entsprechend dem Pfeil 4 links in Figur 1 von unten nach oben. Dementsprechend ist am oberen Ende der Walzbacke 1 die fertige Schraube 5 dargestellt. Der Schraubenkopf 2 wird vor dem Walzen des Gewindes an dem einen Ende des Drahtstifts 3 angeformt.

Die Walzbacke 1, die mit einer entsprechend geformten zweiten Walzbacke zusammenarbeitet, weist 2 parallele Längsseiten 6 auf. Über die Länge der Walzbacke erstreckt sich eine Vielzahl von schräg verlaufenden Rillen 7, deren Querschnittsform die Form des Gewindes und deren Abstand und Schräge die Steigung des Gewindes bestimmt.

Die Walzbacke ist in drei Bereiche unterteilt, nämlich den Einlaufbereich unten in Figur 1, den Glättbereich im mittleren Teil und den Auslauf im oberen Endbereich der Walzbacke 1. Im oberen Auslauf der Walzbacke 1 sind an zwei stellen die Rillen 7 durch quer zur Längsrichtung verlaufende Flächen 8 unterbrochen, in denen die Rillen 7 eine verringerte Tiefe aufweisen. Die Flächen 8 können auch in der Ebene der zwischen den Rillen 7 stehen bleibenden ebenen Flächen 9 liegen.

An dieser Stelle werden in den Schaft der Schraube 5 zwei Unterbrechungen des Gewindes eingewalzt.

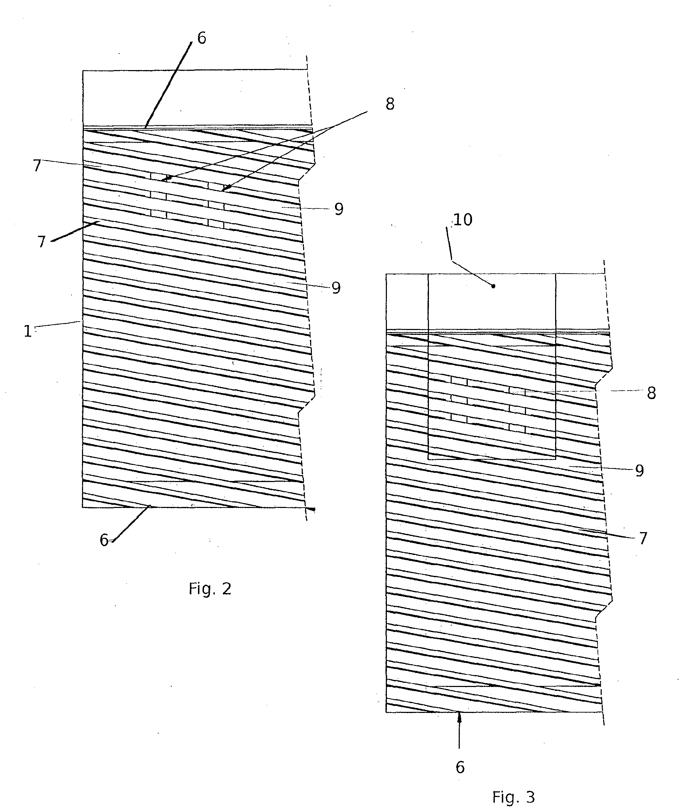

Figur 2 zeigt einen vergrößerten Ausschnitt aus der Walzbacke 1 mit den Rillen 7 und dem zwischen den Rillen 7 stehen bleibenden Flächen 9. Hier ist zu sehen, dass die erhabenen Flächen 8 in den Rillen 7 parallel zueinander verlaufende Seitenkanten aufweisen, die in Querrichtung der Walzbacke 1 verlaufen. Der Abstand dieser beiden Stellen, an denen die Flächen 8 angeordnet sind, entspricht dem halben Umfang des Drahtstifts.

Bei der Ausführungsform der Figur 2 sind diese Flächen 8 als einstückiger Teil der Walzbacke 1 ausgebildet.

Bei der in Figur 3 dargestellten Ausführungsform, die im Übrigen der Darstellung der Figur 2 entspricht, ist in der Walzbacke 1 a eine Kassette 10 eingesetzt, die den Bereich der Walzbacke 1 a bildet, die die erhabenen Flächen 8 enthält. Dieser Ausführungsform macht es möglich, durch Ersetzen der Kassette durch eine Kassette mit Rillen 7 ohne erhabene Flächen 8 Schrauben ohne Schabelücke herzustellen.

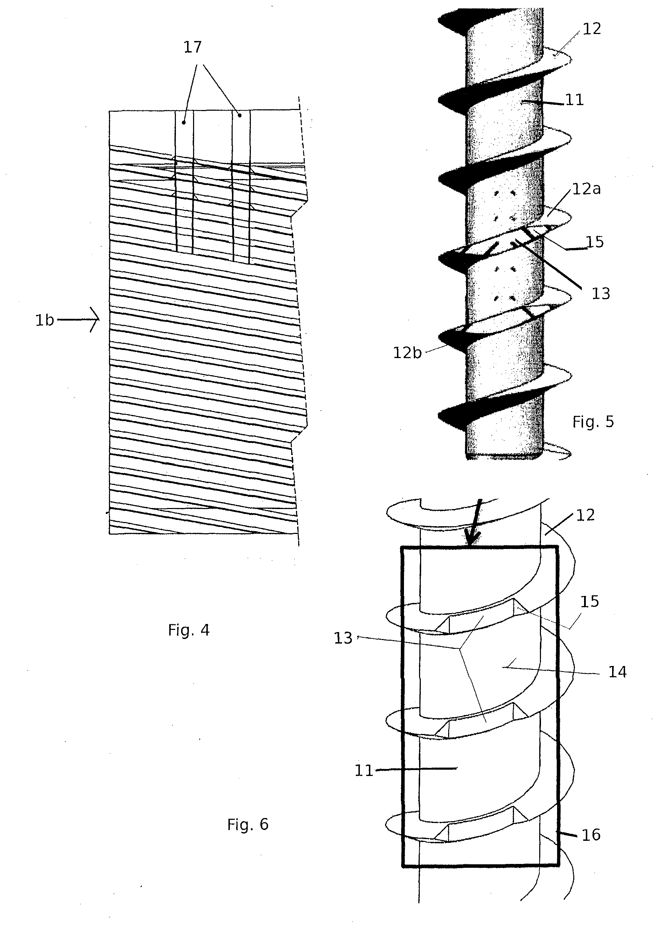

Die Figur 4 zeigt eine weitere Ausführungsform, wie eine Walzbacke 1 b zur Herstellung einer erfindungsgemäßen Schraube ausgebildet sein kann.

In die Walzbacken werden Aussparungen eingefräst, in die dann die Leisten 17 eingesetzt werden können. Diese Leisten 17 haben an den Stellen, wo die Nuten zur Bildung des Gewindes vorhanden sind, ebenfalls Nuten, deren Querschnitt dem Querschnitt der Nuten der Walzbacken entspricht. Nur an den Stellen, wo die Flächen 8 zur Bildung der Schabelücken vorhanden sein sollen, haben die Leisten 17 keine Kerbe. Die Leisten 17 werden in die gefrästen Nuten eingeschoben. Dadurch entsteht die Situation, wie sie in Figur 4 dargestellt ist.

Auch bei der Ausführungsform der Figur 4 können die Leisten 17 gegen Leisten ausgetauscht werden, die keine erhabenen Flächen 8 aufweisen.

Figur 5 zeigt in einem vergrößerten Ausschnitt aus einer Schraube 5 die Schabelücke. Die Schraube 5 enthält einen zylindrischen Schraubenschaft 11. Über den Schraubenschaft 11 erstreckt sich das Schraubengewinde 12, das mithilfe der Walzbacke 1 gewalzt wurde. Beginnend mit einer Windung 12a ist in diesem Gewinde 12 eine Unterbrechung 13 ausgebildet, die im dargestellten Beispiel sowohl die Windung 12a als auch die Windung 12b betrifft. Die Unterbrechung 13 reicht bis kurz vor die Oberfläche des Schraubenkerns 11. Diese Unterbrechung 13 des Gewindes 12 bildet eine Schabelücke 14. Innerhalb der Schabelücke 14 sind durch die Einschnitte im Gewinde 12 Schabeflächen 15 gebildet.

Während bei der Ausführungsform der Figur 5 die Unterbrechung 13 eine geschwungene Form aufweist, zeigt die Ausführungsform der Figur 6 ebenfalls eine Unterbrechung, die anders geformt ist. Die Schabelücke 14 ist hier durch eine Umrandung 16 näher gekennzeichnet. In drei aufeinanderfolgenden Windungen des Gewindes 12 ist hier eine Unterbrechung 13 gebildet, die sich in Umfangsrichtung über einen Winkel von etwa 15° erstreckt. Die Tiefe der Unterbrechung 13 ist etwas geringer als die Gewindehöhe, reicht also bis kurz vor die Oberfläche des Schraubenkerns 11. Die beiden Enden jeder Unterbrechung 13 werden von ebenen Flächen 15 gebildet, die etwa radial verlaufen. In der Ausführungsform der Figur 6 reicht die Schabelücke 14 also in Axialrichtung über drei Windungen des Gewindes 12.

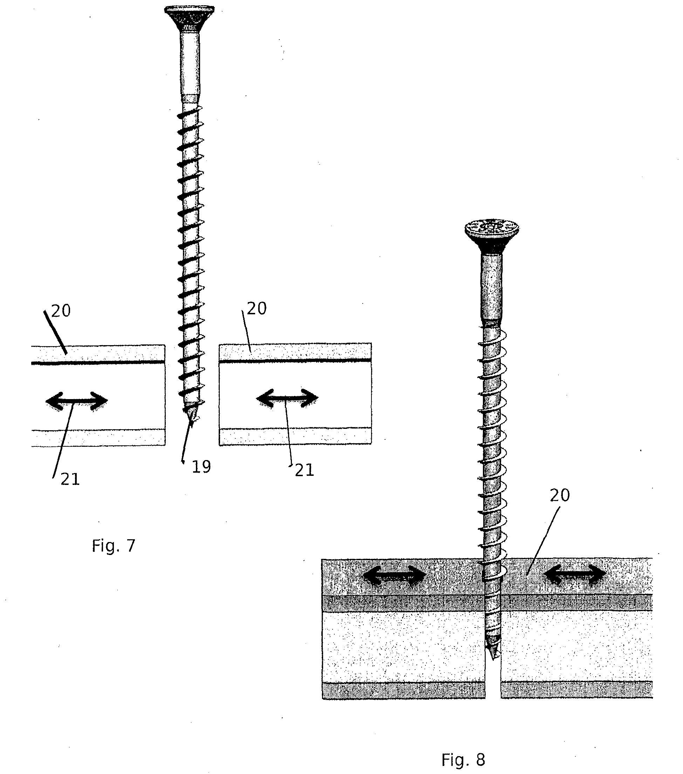

Die Figuren 7 und 8 zeigen schematisch die Art, wie eine Schabelücke 14 hergestellt wird, beispielsweise die Schabelücke 14 der Figur 5.

Die Schraube 5 ist in dem Verfahrenszustand der Figur 7 eigentlich eine fertige Spanplattenschraube. Sie enthält einen Schraubenkopf 2, im Beispiel einen Senkkopf, mit an der Unterseite ausgebildeten Vertiefungen 17. An den Schraubenkopf 2 schließt sich ein kurzer Abschnitt 18 an, in dem der Schraubenschaft 11 glatt ist und einen etwas größeren Durchmesser aufweist als im übrigen Bereich. Im restlichen Bereich enthält die Schraube 5 den zylindrischen Schraubenschaft 11, der sich an seinem dem Schraubenkopf 2 abgewandten vorderen Ende in einer Schraubenspitze 19 fortsetzt. Dort verringert sich der Durchmesser zur Bildung eines Kegels.

Das Schraubengewinde 12 erstreckt sich über den größten Teil des Schraubenschafts bzw. Schraubenkerns 11 bis zur vorderen Spitze 19.

Insoweit handelt es sich um eine herkömmliche Spanplattenschraube.

Im Bereich des vorderen Endes sind zwei Stempel 20 angeordnet, die in einer Richtung 21 quer zur Längsachse der Schraube bewegbar ausgebildet und angeordnet sind. Während die Schraube 5 festgehalten wird, werden diese beiden Stempel 20 aufeinander zu bewegt. Sie werden vorwärts bewegt, bis sie den Schraubenkern 11 der Schraube berühren. Dabei bilden sie in dem Gewinde 12 der Schraube eine Vertiefung, die bis zur Oberfläche des Schraubenkerns 11 reicht. Dieser Zustand ist in Figur 8 dargestellt. Anschließend werden die beiden Stempel 20 wieder zurückgezogen. Die Schraube hat jetzt zwei aufeinander gegenüberliegenden Seiten des Schraubenkerns vorhandene Schabelücke 14 etwa in der Form, wie sie in Figur 5 dargestellt und erläutert ist.

Die Größe der Schabelücke sowohl in Umfangsrichtung als auch in Axialrichtung wird durch die Form und Größe der beiden Stempel bestimmt.

Die Art der Herstellung, die unter Bezugnahme auf Figur 7 und Figur 8 beschrieben und erläutert wurde, hat den Vorteil, dass sie bei ganz normalen Spanplattenschrauben angewandt werden kann.

## Patentansprüche

1. Schraube, mit
1.1 einem zylindrischen Schraubenschaft (11),
1.2 einem an dem einen Ende des Schraubenschafts (11) angeordneten Schraubenkopf (2),
1.3 einer an dem gegenüberliegenden Ende des Schraubenschafts (11) ausgebildeten Schraubenspitze (19), sowie mit
1.4 einem sich über mindestens einen Teil des Schraubenschafts (11) erstreckenden Gewinde (12), das
1.5 zur Bildung mindestens einer in Länge und Breite begrenzten innerhalb des zylindrischen Bereichs des Schraubenschafts (12) angeordneten Schabelücke (14) unterbrochen ist,
1.6 innerhalb der der Gewindegang des Gewindes (12) bei unveränderter Steigung eine verringerte Radialerstreckung zur Bildung einer der Schabelücke (14) entsprechenden Kerbe aufweist, die beidseits von scharfen Kanten begrenzt ist, wobei
1.7 das Gewinde (12) über mindestens eine Windung (12a, 12b, 12c), insbesondere über zwei bis drei Windungen (12a, 12b, 12c) und
1.8 über einen Umfangswinkel von mindestens 15°, insbesondere 30° bis 80° unterbrochen ist.

2. Schraube nach Anspruch 1 , bei der das Gewinde (12) mindestens über die Hälfte der Gewindehöhe unterbrochen ist.

3. Schraube nach einem der vorhergehenden Ansprüche, bei der die Grenzen der Schabelücke (14) in Umfangsrichtung parallel zur Achse der Schraube (5) verlaufen.

4. Schraube nach einem der vorhergehenden Ansprüche, bei der die Begrenzungsflächen (15) der Gewindeunterbrechung (13) etwa radial zur Längsachse der Schraube (5) verlaufen.

5. Schraube nach einem der vorhergehenden Ansprüche, bei der die Gewindeunterbrechung (13) durch Walzen zusammen mit dem Walzen des Gewindes (12) herstellbar ist.

6. Schraube nach einem der Ansprüche 1 bis 4, bei der die Gewindeunterbrechung (13) durch ein nachträgliches Quetschen der Schraube (5) mit zwei gegenläufigen Stempeln (20) herstellbar ist.

7. Verfahren zum Herstellen einer Schraube nach einem der vorhergehenden Ansprüche, bei dem das Schraubengewinde (12) zur Bildung einer in Länge und Breite begrenzten innerhalb des zylindrischen Bereichs des Schraubenschafts angeordneten Schabelücke (14) über einen Umfangswinkel von mindestens 15° und über eine bis drei Windungen unterbrochen wird.

8. Verfahren nach Anspruch 7, bei dem die Schabelücke (14) beim Walzen des Gewindes (12) in den Drahtstift (3) mit gewalzt wird.

9. Verfahren nach Anspruch 7, bei dem die Schabelücke (14) nach dem Herstellen des Gewindes (12) nachträglich in das Gewinde (12) gequetscht wird.

10. Walzbacken zum Durchführen des Verfahrens nach Anspruch 8, mit einer Unterbrechung der zur Bildung des Gewindes dienenden Rillen (7).

## Claims

1. Screw, comprising
1.1 a cylindrical screw shank (11),
1.2 a screw head (2) disposed on the one end of the screw shank (11),
1.3 a screw tip (19) formed on the opposite end of the screw shank (11), and comprising
1.4 a thread (12) extending over at least part of the screw shank (11),
1.5 which thread is interrupted for forming at least one scraping gap (14) limited in length and width, disposed within the cylindrical region of the screw shank (12), and
1.6 within the scraping gap the thread spiral of the thread (12) has a reduced radial extension with unvaried pitch for forming a recess corresponding to the scraping gap (14), which recess is bounded by sharp edges on both sides, wherein
1.7 the thread (12) is interrupted over at least one turn (12a, 12b, 12c), in particular over two to three turns (12a, 12b, 12c), and
1.8 over a circumferential angle of at least 15°, in particular 30° to 80°.

2. Screw according to claim 1, wherein the thread (12) is interrupted at least over half of the thread height.

3. Screw according to any of the preceding claims, wherein the boundaries of the scraping gap (14) in the circumferential direction extend in parallel to the axis of the screw (5).

4. Screw according to any of the preceding claims, wherein the boundary surfaces (15) of the thread interruption (13) extend approximately radially to the longitudinal axis of the screw (5).

5. Screw according to any of the preceding claims, wherein the thread interruption (13) can be produced by rolling together with the rolling of the thread (12).

6. Screw according to any of claims 1 to 4, wherein the thread interruption (13) can be produced by subsequent pinching of the screw (5) with two opposed dies (20).

7. Method for producing a screw according to any of the preceding claims, wherein the screw thread (12) is interrupted for forming a scraping gap (14) limited in length and width, disposed within the cylindrical region of the screw shank over a circumferential angle of at least 15° and over one to three thread turns.

8. Method according to claim 7, wherein the scraping gap (14) is rolled in the wire nail (3) together with the rolling of the thread (12).

9. Method according to claim 7, wherein the scraping gap (14) is pinched into the thread (12) subsequent to producing the thread (12).

10. Rolling jaws for performing the method according to claim 8, including an interruption in the grooves (7) for forming the thread.

## Revendications

1. Vis, comprenant
1.1 une tige de vis cylindrique (11),
1.2 une tête de vis (2) disposée à une extrémité de la tige de vis (11),
1.3 une pointe de vis (19) réalisée à l'extrémité opposée de la tige de vis (11), et
1.4 un filetage (12) s'étendant sur au moins une partie de la tige de vis (11),
1.5 lequel est interrompu pour former au moins un vide de raclage (14) limité en longueur et en largeur et disposé à l'intérieur de la région cylindrique de la tige de vis (12),
1.6 à l'intérieur duquel le filet du filetage (12) présente, pour un pas de vis inchangé, une étendue radiale réduite pour former une entaille correspondant au vide de raclage (14), qui est limitée des deux côtés par des arêtes vives,
1.7 le filetage (12) étant interrompu sur au moins un tour (12a, 12b, 12c), en particulier sur deux à trois tours (12a, 12b, 12c) et
1.8 sur un angle périphérique d'au moins 15°, en particulier de 30° à 80°.

2. Vis selon la revendication 1, dans laquelle le filetage (12) est interrompu au moins sur la moitié de la hauteur du filetage.

3. Vis selon l'une quelconque des revendications précédentes, dans laquelle les limites du vide de raclage (14) s'étendent dans la direction périphérique parallèlement à l'axe de la vis (5).

4. Vis selon l'une quelconque des revendications précédentes, dans laquelle les surfaces de limitation (15) de l'interruption du filetage (13) s'étendent approximativement radialement par rapport à l'axe longitudinal de la vis (5).

5. Vis selon l'une quelconque des revendications précédentes, dans laquelle l'interruption du filetage (13) peut être créée par laminage conjointement avec le laminage du filetage (12).

6. Vis selon l'une quelconque des revendications 1 à 4, dans laquelle l'interruption du filetage (13) peut être créée par un écrasement subséquent de la vis (5) avec deux poinçons de sens opposés (20).

7. Procédé de fabrication d'une vis selon l'une quelconque des revendications précédentes, dans lequel le filetage de vis (12) est interrompu pour former un vide de raclage (14) limité en longueur et en largeur et disposé à l'intérieur de la région cylindrique de la tige de vis sur un angle périphérique d'au moins 15° et sur un à trois tours.

8. Procédé selon la revendication 7, dans lequel le vide de raclage (14) est laminé lors du laminage du filetage (12) dans la tige de fil métallique (3).

9. Procédé selon la revendication 7, dans lequel le vide de raclage (14) est écrasé ultérieurement dans le filetage (12) après la fabrication du filetage (12).

10. Mâchoire de laminage pour mettre en oeuvre le procédé selon la revendication 8, comprenant une interruption des rainures (7) servant à former le filetage.
